# EUROPÄISCHE PATENTSCHRIFT

(11) **EP 3 327 699 B1**
(45) Veröffentlichungstag und Bekanntmachung des Hinweises auf die Patenterteilung: **25.12.2019**
(21) Anmeldenummer: 17200399.8
(22) Anmeldetag: 07.11.2017
(51) Int. Cl.: G08G 5/00, H04B 1/54

(54) **VERFAHREN ZUR ÜBERTRAGUNG VON SPRACHSIGNALEN**
METHOD FOR TRANSFERRING VOICE SIGNALS
PROCÉDÉ DE TRANSMISSION DE SIGNAUX VOCAUX

(30) Priorität: 24.11.2016 AT 510652016
(43) Veröffentlichungstag der Anmeldung: 30.05.2018
(73) Patentinhaber: Frequentis AG, 1100 Wien (AT)
(72) Erfinder: Aster, Robert, 1230 Wien (AT)
(74) Vertreter: Wildhack & Jellinek

(56) Entgegenhaltungen:
- KR-A- 20090 121 416
- US-A1- 2013 322 424
- US-A1- 2015 270 892

## Beschreibung

Die Erfindung betrifft ein Verfahren zur Übertragung von Sprachsignalen zwischen einem Controller und einem Verkehrsteilnehmer gemäß dem Oberbegriff des Patentanspruchs 1. Weiters betrifft die Erfindung eine Anordnung zur Kommunikation zwischen einem Controller und einem Verkehrsteilnehmer gemäß dem Oberbegriff des Patentanspruchs 5.

In der Flugsicherung kommunizieren Controller, wie beispielsweise Fluglotsen, mit den ihnen zugeordneten Verkehrsteilnehmern, insbesondere Flugzeugen oder Luftfahrzeugen, über Sprachkommunikation. Die US 2015/0270892 A1 offenbart ein digitales Tonein- oder -ausgabesystem umfassend zumindest ein Funkgerät, zumindest ein Audiogerät, einen Audioterminal und einen Funkterminal, das den Benutzern das Mithören eines Side Tones ermöglicht. Die KR 20090121416 A zeigt eine Vorrichtung für die Flugsicherung, bei der zur Vermeidung von stark verzögerten Side Tone Signalen. Die US 2013/0322424 A1 zeigt ein Multivoice-Funksystem umfassend ein Nahbereichs-Funkgerät und ein Weitempfangs-Funkgerät, das den Benutzern das gleichzeitige Hören und Sprechen von bzw. mit anderen Benutzern mit Hilfe von Zeitbereichs-Multiplexing ermöglicht.

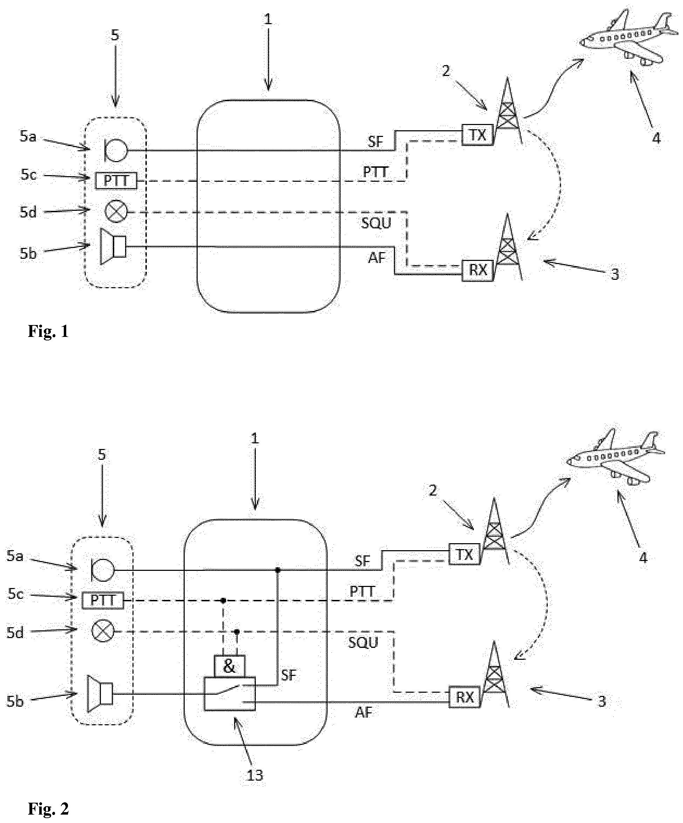

Fig. 1 zeigt eine schematische Darstellung einer Anordnung zur Sprachkommunikation gemäß dem Stand der Technik. Diese Sprachkommunikationsanordnung umfasst einen Controllerarbeitsplatz 5, der zumindest ein Mikrofon 5a sowie einen Lautsprecher 5b aufweist sowie ein Vermittlungssystem 1, dem das vom Mikrofon 5a aufgenommene Sprachsignal SF des Controllers zugeführt ist. Das Vermittlungssystem 1 ist an eine Sendeantenne 2 sowie an eine Empfangsantenne 3 angeschlossen. Das Vermittlungssystem 1 leitet die einzelnen Sprachsignale SF zwischen dem Controllerarbeitsplatz 5 und den Sende- und Empfangsantennen 2, 3 weiter. Die dem Vermittlungssystem 1 zugeführten Sprachsignale SF des Mikrofons 5a des Controllers werden vom Vermittlungssystem 1 an eine Sendeantenne 2 weitergeleitet. Sobald der Controller einen am Controllerarbeitsplatz 5 befindlichen Push-To-Talk-Button 5c betätigt, wird ein diesbezügliches Sendesignal PTT über das Vermittlungssystem 1 an die Sendeantenne 2 weitergeleitet. Liegt an der Sendeantenne 2 ein positives Sendesignal PTT vor, so wird das Sprachsignal SF per Funk abgestrahlt und insbesondere auch von einem im Sendebereich der Sendeantenne 2 befindlichen Teilnehmer 4 wie beispielsweise einem Luftfahrzeug empfangen.

Sprachsignale eines Teilnehmers 4 werden von der Empfangsantenne 3 empfangen und von dieser an das Vermittlungssystem 1 übermittelt, das die derart empfangenen Sprachsignale AF seinerseits an den Lautsprecher 5b des Controllers weiterleitet. Stellt die Empfangsantenne 3 fest, dass ein Sprachsignal AF über Funk empfangen wird, erstellt diese ein Squelch-Signal SQU, welches diesen Umstand anzeigt. Das Squelch-Signal SQU wird an den das Vermittlungssystem 1 sowie von diesem an den Controllerarbeitsplatz 5 weitergeleitet und an einer Anzeige 5d, beispielsweise mittels einer Kontrollleuchte, visualisiert.

In diesem Zusammenhang ist zu beachten, dass auch Sprachsignale SF des Controllers selbst, die mittels des Mikrofons 5a an das Vermittlungssystem 1 weitergeleitet von der Sendeantenne 2 ausgestrahlt werden, üblicherweise von der Empfangsantenne 3 empfangen und als empfangene Sprachsignale AF an das Vermittlungssystem 1 zurückgeleitet werden. Diese empfangenen Sprachsignale AF sind für den Controller am Lautsprecher 5b zu hören.

Für den Controller ist es wichtig, eine Bestätigung zu bekommen, dass ein von ihm abgegebenes Sprachsignal SF tatsächlich abgestrahlt wird. Beim dem in Fig. 1 dargestellten und aus dem Stand der Technik bekannten System findet eine solche natürliche Rückmeldung bereits dadurch statt, dass jedes eigene, über die Sendeantenne 2 ausgesandte Sprachsignal SF über die Empfangsantenne 3 das Vermittlungssystem 1 übermittelt und als empfangenes Sprachsignal AF wieder zum Lautsprecher 5a des betreffenden Controller übermittelt wird und für diesen zu hören ist.

Ein solches durch Rückkopplung eines abgesandten Sprachsignals SF hörbares empfangenes Sprachsignal AF wird üblicherweise als echter Remote Side Tone bezeichnet. Wenn also ein Controller den abgesetzten Funkspruch als Remote Side Tone in seinem Lautsprecher 5b hört, kann er davon ausgehen, dass der Funkspruch tatsächlich abgestrahlt wurde.

Eine solche Rückbestätigung funktioniert allerdings nur zufriedenstellend, wenn die Laufzeiten von ausgehenden und eingehenden Sprachsignalen SF, AF durch das Vermittlungssystem 1 über die Sende- und Empfangsantennen 2, 3 und die Entfernung zwischen den Antennen der abgestrahlten Sende- und Empfangsantennen 2, 3 ausreichend kurz sind, wobei die Signallaufzeiten in diesem Fall kürzer als etwa 20 Millisekunden sind.

Immer dann, wenn das empfangene Sprachsignal AF länger als etwa 20 Millisekunden gegenüber dem vom Lotsen ausgesandten Sprachsignal SF verzögert wahrgenommen wird, empfindet der Lotse, der die Sprachmitteilung SF aussendet, das empfangene Sprachsignal AF als unangenehmes, die Kommunikation störendes Echo. Insbesondere kann eine solche längere Signalverzögerung dann auftreten, wenn ausgesandte oder empfangene Sprachsignale SF, AF digitalisiert und paketiert übertragen werden, da gerade eine solche Vorgehensweise wesentlich zur Verlängerung der Signallaufzeiten beiträgt, wodurch Signallaufzeiten entstehen, die 20 Millisekunden übersteigen.

In Fig. 2 zeigt eine weitere, aus dem Stand der Technik bekannte Vorgehensweise, die versucht, ein solches Echo zu vermeiden. Diese Vorgehensweise unterscheidet sich von der in **Fig. 1** dargestellten bekannten Vorgehensweise dadurch, dass das Vermittlungssystem 1 eine Signalweiterleitung von dem vom Mikrofon 5a generierten Sprachsignal SF direkt zum Lautsprecher 5b zurück jeweils dann vornimmt, wenn seitens der Empfangsantenne 3 aufgrund des Vorhandenseins eines Squelch-Signals SQU das bloße Vorliegen eines empfangenen Sprachsignals AF detektiert wird. Wie bereits erwähnt, generiert die Empfangsantenne 3 entsprechend aus dem Stand der Technik bekannter Vorgehensweisen ein Squelch-Signal SQU. In diesem Fall steuert das von der Empfangsantenne 3 erstellte Squelch-Signal einen Schalter 13, der das vom Controller über das Mikrofon 5a abgegebene Sprachsignal SF unmittelbar dem Lautsprecher 5b des Controllers zuführt.

Die Steuerung des Schalters 13 erfolgt bei dem in **Fig. 2** dargestellten Stand der Technik vorteilhafterweise so, dass eine Durchschaltung des vom Mikrofon 5a abgegebenen Sprachsignals SF auf den Lautsprecher 5b nur dann erfolgt, wenn einerseits ein Squelch-Signal SQU seitens des Empfängers 3 vorliegt und andererseits der Controller den für die Abgabe von Sprachsignalen SF erforderlichen Push-To-Talk-Button 5c drückt.

Diese Vorgehensweise beseitigt zwar das durch die Verzögerung entstehende Echo, hat jedoch den wesentlichen Nachteil, dass der Controller, während er selbst Sprachsignale SF abgibt, nicht in der Lage ist, eingehende Sprachsignale AF von Verkehrsteilnehmern 4 zu empfangen, da er, während er spricht, lediglich seine eigene Stimme hört.

Aufgabe der Erfindung ist es, die vorstehend genannten Nachteile zu vermeiden und ein Sprachübertragungsverfahren sowie ein Sprachvermittlungssystem zur Verfügung zu stellen, das die vorstehend genannten Nachteile nicht aufweist. Die Erfindung löst diese Aufgabe mit den kennzeichnenden Merkmalen des Patentanspruchs 1.

Die Erfindung sieht ein Verfahren zur Funkkommunikation zwischen einem Controller und zumindest einem Verkehrsteilnehmer vor,
wobei von einem Controller Sprachsignale erstellt werden,
wobei die Sprachsignale des Controllers über ein Vermittlungssystem an eine Sendeantenne übertragen und von dieser als Funksignal ausgesendet werden,
wobei Sprachsignale über eine Empfangsantenne empfangen und an das Vermittlungssystem übermittelt werden,
wobei ein Squelch-Signal erstellt wird, das angibt, ob in dem an der Empfangsantenne anliegenden Signal Sprachmitteilungen enthalten sind.

Dabei ist erfindungsgemäß vorgesehen, dass
- aus dem empfangenen Sprachsignal der Anteil des vom Controller abgegebenen, insbesondere zeitverzögert empfangenen, Sprachsignals entfernt oder kompensiert wird und derart ein bereinigtes Sprachsignal ermittelt wird, und
- das bereinigte Sprachsignal an den Controller übermittelt wird, wobei für den Fall, dass ein Squelch-Signal vorliegt, das bereinigte Sprachsignal mit dem vom Controller abgegebenen und beim Vermittlungssystem nicht zeitverzögert eingelangten Signal überlagert wird und an den Controller zurück übermittelt wird.

Um den Einsatz einfacherer Echo-Cancelling-Verfahren zu ermöglichen und gleichzeitig eine Vielzahl von Empfangsantennen betreiben zu können, die potentiell das vom Controller abgegebene Signal jeweils zeitversetzt empfangen, kann vorgesehen sein, dass
- aus den einzelnen empfangenen Sprachsignalen für jede Antenne separat das vom Controller abgegebene Sprachsignal entfernt oder kompensiert wird und derart bereinigte Sprachsignale erstellt werden, und
- dass einzelne oder alle bereinigten Sprachsignale mit den vom Controller abgegebenen Signalen überlagert und/oder an den Controller übermittelt werden, wenn zumindest eines der Squelch-Signale der Empfangsantennen aktiv ist.

Zur vorteilhaften Sprachkommunikation kann zusätzlich vorgesehen sein, dass
- die Sendeantenne das Sprachsignal des Controllers nur dann aussendet, wenn ein Push-To-Talk-Button gedrückt ist, und
- das vom Controller abgegebene Sprachsignal nur dann an den Controller zurück übermittelt und zu diesem Zweck mit dem bereinigten Sprachsignal überlagert wird, wenn der Push-To-Talk-Button gedrückt wurde und/oder unterdrückt wird, wenn der Push-To-Talk-Button nicht gedrückt wurde.

In einer bevorzugten Ausführungsform der Erfindung kann weiters vorgesehen sein, dass die Echokompensationseinheit nur dann aktiv ist, wenn ein Squelch-Signal vorliegt. Die Echokompensationseinheit braucht damit nicht ständig arbeiten sondern nur genau dann, wenn gerade ein Funkspruch von der Empfangsantenne 3 empfangen wird.

Weiters betrifft die Erfindung eine Funkkommunikationsanordnung gemäß Anspruch 5. Des weiteren löst die Erfindung die Aufgabe bei einer Funkkommunikationsanordnung der eingangs genannten Art mit den kennzeichnenden Merkmalen des Patentanspruchs 5. Eine solche erfindungsgemäße Funkkommunikationsanordnung, umfassend
- zumindest einen Controllerarbeitsplatz mit einem Mikrofon und einem Lautsprecher,
- eine Sendeantenne und eine Empfangsantenne,
- ein Vermittlungssystem, das an den Controllerarbeitsplatz sowie an die Sendeantenne und die Empfangsantenne angeschlossen ist,
- wobei das Vermittlungssystem vom Controller erstellte Sprachsignale zur Funkübermittlung an die Sendeantenne weiterleitet,
- wobei das Vermittlungssystem von der Empfangsantenne empfangene Sprachsignale an den Controllerarbeitsplatz weiterleitet,
- wobei die Empfangsantenne und/oder das Vermittlungssystem dazu ausgebildet ist, ein Squelch-Signal zu generieren, das angibt, ob in dem an der Empfangsantenne anliegenden Signal Sprachmitteilungen enthalten sind.

Erfindungsgemäß ist vorgesehen, dass
- im Vermittlungssystem eine Echokompensationseinheit vorgesehen ist, die dazu ausgebildet ist, aus dem empfangenen Sprachsignal den Anteil des vom Controller abgegebenen, insbesondere zeitverzögert empfangenen, Sprachsignals zu entfernen oder zu kompensieren wird und derart ein bereinigtes Sprachsignal zu erstellen,
- im Vermittlungssystem ein Schalter vorgesehen ist, an dessen Eingang das vom Controller abgegebene Sprachsignal zugeführt ist und der dazu ausgebildet ist, bei Vorliegen eines Squelch-Signals die vom Controllerarbeitsplatz abgegebenen Sprachsignale an seinen Ausgang weiterzuleiten und die Sprachsignale bei Fehlen eines Squelch-Signals zu unterdrücken, und
- im Vermittlungssystem ein der Echokompensationseinheit und dem Schalter nachgeschalteter Mischer vorgesehen ist, der dazu ausgebildet ist, die am Ausgang der Echokompensationseinheit und des Schalters anliegenden Signale zu überlagern und an seinem Ausgang ein durch derartige Überlagerung erstelltes Überlagerungssignal zur Verfügung zu halten, wobei der Ausgang des Mischers an den Lautsprecher des Controllerarbeitsplatzes angeschlossen ist.

Um den Einsatz einfacherer Echo-Cancelling Verfahren zu ermöglichen und gleichzeitig eine Vielzahl von Empfangsantennen betreiben zu können, die potentiell das vom Controller abgegebene Signal zeitversetzt empfangen, kann vorgesehen sein, dass
- für jede Empfangsantenne jeweils separat eine Echokompensationseinheit vorgesehen ist, die separat das vom Controller abgegebene Sprachsignal aus dem jeweils empfangenen Sprachsignal der jeweiligen Empfangsantenne entfernt oder kompensiert und derart ein bereinigtes Sprachsignale erstellt, und
dass der Schalter derart gesteuert ist, dass er bei Vorliegen zumindest eines der Squelch-Signale der Empfangsantennen das vom Controllerarbeitsplatz abgegebenen Sprachsignal an seinen Ausgang weiterleitet.

Zur vorteilhaften Sprachkommunikation kann zusätzlich vorgesehen sein, dass
- am Controllerarbeitsplatz ein Push-To-Talk-Button vorgesehen ist, dessen Sendesignal an das Vermittlungssystem und an die Sendeantenne weitergeleitet ist,
- die Sendeantenne das Sprachsignal des Controllers nur dann aussendet, wenn das Sendesignal indiziert, dass der Push-To-Talk-Button gedrückt ist,
   und
- der Schalter dazu ausgebildet ist, die am Eingang des Schalters anliegenden vom Controllerarbeitsplatz abgegebenen Sprachsignale an seinen Ausgang weiterzuleiten, wenn einerseits ein Squelch-Signal vorliegt und andererseits das Sendesignal indiziert, dass der Push-To-Talk-Button gedrückt ist.

In einer bevorzugten Ausführungsform der Erfindung kann weiters vorgesehen sein, dass die Echokompensationseinheit nur dann aktiv ist, wenn ein Squelch-Signal der Empfangsantenne indiziert, dass gerade ein Funkspruch von der Empfangsantenne empfangen wird. Die Echokompensationseinheit braucht damit nicht ständig arbeiten sondern nur genau dann, wenn gerade ein Funkspruch von der Empfangsantenne 3 empfangen wird.

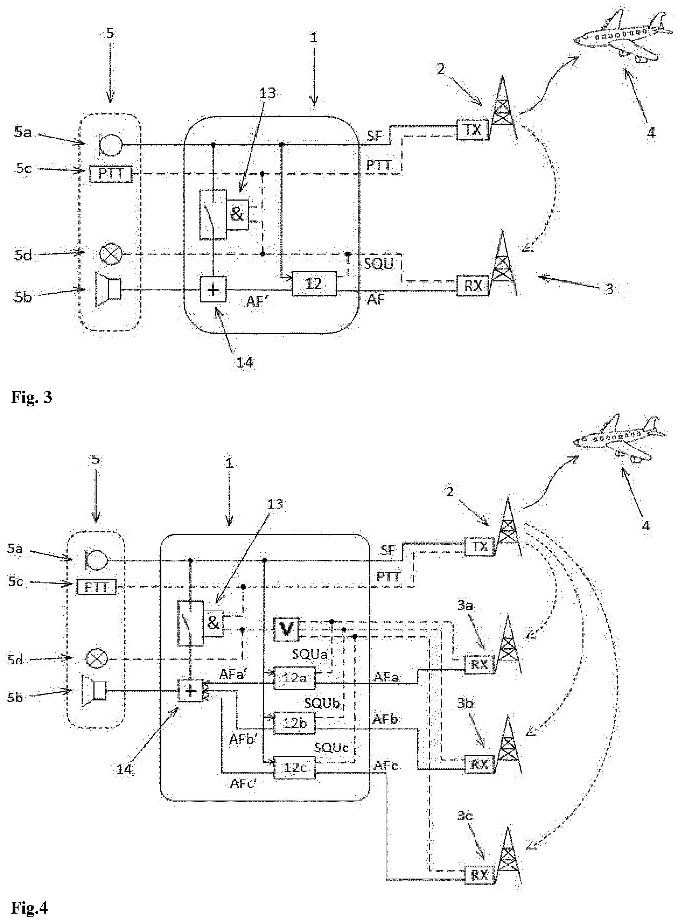

Zwei bevorzugte Ausführungsformen der Erfindung sind anhand der weiteren Zeichnungsfiguren näher dargestellt. **Fig. 3** zeigt schematisch eine erste Ausführungsform der Erfindung mit lediglich einer einzigen Empfangsantenne. **Fig. 4** zeigt eine zweite Ausführungsform der Erfindung mit einer Mehrzahl von Empfangsantennen.

Die erste in **Fig. 3** dargestellte Ausführungsform der Erfindung umfasst einen Controllerarbeitsplatz 5, ein Vermittlungssystem 1, sowie eine Sendeantenne 2 und eine Empfangsantenne 3.

Typischerweise weisen erfindungsgemäße Ausführungsformen eine Vielzahl von Controllerarbeitsplätzen 5 auf, wobei in **Fig. 3** lediglich ein einziger Controllerarbeitsplatz 5 beispielhaft dargestellt ist. Dieser Controllerarbeitsplatz 5 umfasst ein Mikrofon 5a und einen Lautsprecher 5b, die vorteilhafterweise als Headset ausgebildet sind. Darüber hinaus weist der Controllerarbeitsplatz 5 auch einen Push-To-Talk-Button 5c sowie eine Squelch-Anzeige 5d auf. Der Push-To-Talk-Button 5c wird dazu verwendet, die Sendeantenne 2 derart anzusteuern, die vom Mikrofon 5a aufgenommene Sprachsignale SF des Controllers abzusenden. Die Squelch-Anzeige 5d liefert dem Controller Auskunft darüber, ob über die Empfangsantenne 3 gerade ein Sprachsignal AF empfangen wurde. Sämtliche Komponenten des Controllerarbeitsplatzes 5 sind an das Vermittlungssystem 1 angeschlossen.

Im vorliegenden Ausführungsbeispiel der Erfindung ist im Vermittlungssystem 1 ein Schalter 13 vorgesehen, dessen Eingang unmittelbar das Sprachsignal SF des Mikrofons 5a des Controllerarbeitsplatzes 5 zugeführt ist. Der Schalter 13 wird dann geschlossen, wenn der Push-To-Talk-Button 5c des Controllerarbeitsplatzes 5 gedrückt ist. Darüber hinaus kann, wie in **Fig. 3** dargestellt, bevorzugt vorgesehen sein, dass der Schalter 13 auch nur dann geschlossen wird, wenn zusätzlich das Squelch-Signal SQU der Empfangsantenne 3 indiziert, dass gerade ein Funkspruch von der Empfangsantenne 3 empfangen wird.

Weiters umfasst das Vermittlungssystem 1 eine Echokompensationseinheit 12, der die von der Empfangsantenne 3 empfangenen Sprachsignale AF sowie das Squelch-Signal SQU zugeführt sind. Die vom Controller abgegebenen Sprachsignale SF sind der Echokompensationseinheit 12 als Referenzsignale zugeführt. Die Echokompensationseinheit 12 hat die Aufgabe, Anteile von zeitversetzt empfangenen Sprachsignalen AF, die vom Controller abgegeben wurden, aus dem Sprachsignal AF der Empfangsantenne 3 zu kompensieren und ein derart kompensiertes Sprachsignal AF' an seinem Ausgang bereitzuhalten. Grundsätzlich wäre es zwar möglich, die Echokompensationseinheit 12 ständig arbeiten zu lassen. Solange kein Funkspruch von der Empfangsantenne 3 empfangen wird, braucht die Echokompensationseinheit 12 aber nicht aktiv zu sein. Bevorzugterweise wird sie daher so angesteuert, dass sie nur bei Vorliegen eines Squelch-Signals SQU aktiv wird.

Das am Ausgang der Echokompensationseinheit 12 anliegende kompensierte Sprachsignal AF' wird in einer Überlagerungseinheit 14 (in der Folge auch als Mischer 14 bezeichnet) mit dem am Ausgang des Schalters 13 anliegenden Signal überlagert. Am Ausgang der Überlagerungseinheit 14 liegt ein Überlagerungssignal an, das an den Lautsprecher 5b des Controllerarbeitsplatzes 5 übertragen wird. Das Squelch-Signal SQU der Antenne 3 wird an die Anzeige 5d des Controllerarbeitsplatzes 5 weitergeleitet.

Durch diese konkrete Vorgehensweise wird erreicht, dass der Controller einerseits die von ihm abgegebenen Sprachsignale SF ohne nennenswerte Zeitverzögerung wahrnimmt und derart nachvollziehen kann, dass die von ihm abgegebenen Sprachsignale SF per Funk abgesendet wurden. Zudem besteht der Vorteil, dass der Controller einlangende Sprachsignale AF auch wahrnehmen kann, während er selbst spricht bzw Sprachsignale SF abgibt.

Die in **Fig. 4** dargestellte zweite Ausführungsform der Erfindung unterscheidet sich von der in **Fig. 3** dargestellten Ausführungsform der Erfindung dadurch, dass anstelle einer Empfangseinheit eine Mehrzahl von Empfangseinheiten 3a, 3b, 3c vorhanden ist. Jede einzelne Empfangseinheit 3a, 3b, 3c gibt ein separates empfangenes Sprachsignal AFa, AFb, AFc sowie ein separates Squelch-Signal SQUa, SQUb, SQUc ab.

Zur Steuerung des Schalters 13 wird anstelle des einen Squelch-Signals ein Signal verwendet, das durch Oder-Verknüpfung sämtlicher Squelch-Signale SQUa, SQUb, SQUc erstellt wird. Dadurch reicht es aus, dass ein Squelch-Signal SQUa, SQUb, SQUc lediglich einer einzigen Empfangsantenne 3a, 3b, 3c vorliegt, um die lokale Weiterleitung von Sprachsignalen SF des Controllers an den Controller zurück zu bewirken. Wiederum kann vorgesehen sein, dass eine derartige lokale Weiterleitung des Sprachsignals vom Controller an den Controller zurück nur dann stattfindet, wenn gleichzeitig der Push-To-Talk-Button 5c des betreffenden Controllers gedrückt ist.

Bei einer Vielzahl von Empfangsantennen 3a, 3b, 3c wird die Signalbereinigung durch Echo-Cancelling jeweils separat mit einer separaten Echokompensationseinheit 12a, 12b, 12c vorgenommen. Im vorliegenden Vermittlungssystem 1 sind insgesamt drei Echokompensationseinheiten 12a, 12b, 12c vorgesehen, denen jeweils das empfangene Sprachsignal AFa, AFb, AFc jeweils einer Empfangsantenne mitsamt dem zugehörigen Squelch-Signal SQUa, SQUb, SQUc sowie das vom Mikrofon 5a abgegebene Sprachsignal SF als Referenzsignal zugeführt ist. Die betreffenden echobereinigten Signale AFa', AFb', AFc' sowie das am Ausgang des Schalters 13 anliegende Signal werden einem Mischer 14 zugeführt. Der Ausgang des Mischers 14 ist an den Lautsprecher 5b des Controllerarbeitsplatzes 5 angeschlossen.

Gibt nun ein Controller über den Controllerarbeitsplatz 5 bzw. das Mikrofon 5a ein Sprachsignal SF an das Vermittlungssystem 1 weiter und drückt er gleichzeitig den Push-To-Talk-Button 5c, so leitet das Vermittlungssystem 1 die Sprachnachricht SF an die Sendeantenne 2 weiter, die ein dem Sprachsignal SF entsprechendes Funksignal absendet. Darüber hinaus kann gleichzeitig von einem anderen Kommunikationsteilnehmer 4 ein Sprachsignal abgesendet werden, das von der Empfangsantenne 3 bzw. von einer oder mehrerer Empfangsantennen 3a, 3b, 3c empfangen wird. Die Empfangsantennen 3a, 3b, 3c geben dementsprechend jeweils ein empfangenes Sprachsignal AFa, AFb, AFc an die Vermittlungseinheit 1 weiter. Weiters geben die Empfangsantennen 3a, 3b, 3c jeweils ein Squelch-Signal SQUa, SQUb, SQUc an das Vermittlungssystem 1 weiter.

In den empfangenen Sprachsignalen AFa, AFb, AFc sind nunmehr die Stimme des Controllers sowie die Stimme eines anderen Verkehrsteilnehmers 4 überlagert enthalten. Da die so erhaltenen Sprachsignale AFa, AFb, AFc den jeweiligen Echokompensationseinheiten 12a, 12b, 12c zugeführt wurden, erhält man am Ausgang der jeweiligen Echokompensationseinheiten 12a, 12b, 12c jeweils echobereinigte Empfangssignale AFa', AFb', AFc', in denen lediglich die Stimme des weiteren Verkehrsteilnehmers 4 zu hören ist, während die zeitverzögerte Stimme des Controllers mittels Echokompensation entfernt wurde.

Da auch zumindest eines der Squelch-Signale SQUa, SQUb, SQUc aktiv ist, wird der Schalter 13 durchgeschalten, sodass am Ausgang des Schalters 13 ein Sprachsignal anliegt, das das nicht zeitverzögerte Sprachsignal SF des Controllers enthält. In weiterer Folge wird das am Ausgang des Schalters 13 anliegende Signal sowie die am Ausgang der Echokompensationseinheiten 12a, 12b, 12c anliegenden echobereinigte Empfangssignale AFa', AFb', AFc' an dem Mischer 14 weitergeleitet und von diesem zu einem gemeinsamen Signal überlagert und an den Lautsprecher 5b des Controllerarbeitsplatzes 5 weitergeleitet.

Der Controller nimmt letztlich auf dem Lautsprecher 5b seine eigene Stimme ohne Zeitverzögerung wahr und hört gleichzeitig Sprachsignale, die von anderen Kommunikationsteilnehmern 4 bei ihm einlangen.

## Patentansprüche

1. Verfahren zur Funkkommunikation zwischen einem Controller und zumindest einem Verkehrsteilnehmer,
wobei von einem Controllerarbeitsplatz (5) Sprachsignale (SF) erstellt und abgegeben werden, wobei die vom Controllerarbeitsplatz (5) abgegebenen Sprachsignale (SF) über ein Vermittlungssystem (1) an eine Sendeantenne (2) übertragen und von dieser als Funksignal ausgesendet werden,
wobei Sprachsignale (AF) über eine Empfangsantenne (3) empfangen und an das Vermittlungssystem (1) übermittelt werden,
wobei ein Squelch-Signal (SQU) erstellt wird, das angibt, ob in dem an der Empfangsantenne (3) anliegenden Signal Sprachmitteilungen enthalten sind,
**dadurch gekennzeichnet, dass**
- aus dem empfangenen Sprachsignal (AF) der Anteil des vom Controllerarbeitsplatz (5) abgegebenen, insbesondere zeitverzögert empfangenen, Sprachsignals (SF) entfernt oder kompensiert wird und derart ein bereinigtes Sprachsignal (AF') ermittelt wird, und
- das bereinigte Sprachsignal (AF') an den Controllerarbeitsplatz (5) übermittelt wird, wobei für den Fall, dass ein Squelch-Signal (SQU) vorliegt, das bereinigte Sprachsignal (AF') mit dem vom Controllerarbeitsplatz (5) abgegebenen und beim Vermittlungssystem (1) nicht zeitverzögert eingelangten Signal (SF) überlagert wird und an den Controllerarbeitsplatz (5) zurück übermittelt wird.

2. Verfahren nach Anspruch 1 mit einem Vermittlungssystem (1) mit einer Vielzahl von Empfangsantennen (3a, 3b, 3c), **dadurch gekennzeichnet, dass**
- aus den einzelnen empfangenen Sprachsignalen (AFa, AFb, AFc) für jede Antenne (3a, 3b, 3c) separat das vom Controllerarbeitsplatz (5) abgegebene Sprachsignal (SF) entfernt oder kompensiert wird und derart jeweils ein bereinigtes Sprachsignal (AFa', AFb', AFc') erstellt wird, und
- dass einzelne oder alle bereinigten Sprachsignale (AFa', AFb', AFc') mit den vom Controllerarbeitsplatz (5) abgegebenen Signalen (SF) überlagert und/oder an den Controllerarbeitsplatz (5) übermittelt werden, wenn zumindest eines der Squelch-Signale (SQUa, SQUb, SQUc) der Empfangsantennen (3a, 3b, 3c) aktiv ist.

3. Verfahren nach einem der Ansprüche 1 oder 2, **dadurch gekennzeichnet, dass**
- die Sendeantenne (2) das vom Controllerarbeitsplatz (5) abgegebene Sprachsignal (SF) nur dann aussendet, wenn ein Push-To-Talk-Button (5c) gedrückt ist, und
- das vom Controllerarbeitsplatz (5) abgegebene Sprachsignal (SF) nur dann an den Controllerarbeitsplatz (5) zurück übermittelt und zu diesem Zweck mit dem bereinigten Sprachsignal überlagert wird, wenn der Push-To-Talk-Button (5c) gedrückt wurde und/oder unterdrückt wird, wenn der Push-To-Talk-Button (5c) nicht gedrückt wurde.

4. Verfahren nach einem der Ansprüche 1 bis 3, **dadurch gekennzeichnet, dass** die Echokompensationseinheit (12) nur dann aktiv ist, wenn ein Squelch-Signal (SQU) vorliegt.

5. Anordnung zur Funkkommunikation zwischen einem Controller und zumindest einem Verkehrsteilnehmer, umfassend
- zumindest einen Controllerarbeitsplatz (5) mit einem Mikrofon (5a) und einem Lautsprecher (5b),
- eine Sendeantenne (2) und eine Empfangsantenne (3),
- ein Vermittlungssystem (1), das an den Controllerarbeitsplatz (5) sowie an die Sendeantenne (2) und die Empfangsantenne (3) angeschlossen ist,
- wobei das Vermittlungssystem (1) dazu ausgebildet ist, vom Controllerarbeitsplatz (5) erstellte und abgegebene Sprachsignale (SF) zur Funkübermittlung an die Sendeantenne (2) weiterzuleiten,
- wobei das Vermittlungssystem (1) dazu ausgebildet ist, von der Empfangsantenne (3) empfangene Sprachsignale (AF) an den Controllerarbeitsplatz (5) weiterzuleiten,
- wobei die Empfangsantenne (3) und/oder das Vermittlungssystem (1) dazu ausgebildet ist, ein Squelch-Signal (SQU) zu generieren, das angibt, ob in dem an der Empfangsantenne (3) anliegenden Signal Sprachmitteilungen enthalten sind,
**dadurch gekennzeichnet, dass**
- im Vermittlungssystem (1) eine Echokompensationseinheit (12) vorgesehen ist, die dazu ausgebildet ist, aus dem empfangenen Sprachsignal (AF) den Anteil des vom Controllerarbeitsplatz (5) abgegebenen, insbesondere zeitverzögert empfangenen, Sprachsignals (SF) zu entfernen oder zu kompensieren und derart ein bereinigtes Sprachsignal (AF') zu erstellen,
- im Vermittlungssystem (1) ein Schalter (13) vorgesehen ist, an dessen Eingang das vom Controllerarbeitsplatz (5) abgegebene Sprachsignal (SF) zugeführt ist und der dazu ausgebildet ist, bei Vorliegen eines Squelch-Signals (SQU) die vom Controllerarbeitsplatz (5) abgegebenen Sprachsignale (SF) an seinen Ausgang weiterzuleiten und die abgegebenen Sprachsignale (SF) bei Fehlen eines Squelch-Signals (SQU) zu unterdrücken, und
- im Vermittlungssystem (1) ein der Echokompensationseinheit (12) und dem Schalter (13) nachgeschalteter Mischer (14) vorgesehen ist, der dazu ausgebildet ist, die am Ausgang der Echokompensationseinheit (12) und des Schalters (13) anliegenden Signale zu überlagern und an seinem Ausgang ein durch derartige Überlagerung erstelltes Überlagerungssignal zur Verfügung zu halten, wobei der Ausgang des Mischers (14) an den Lautsprecher (5b) des Controllerarbeitsplatzes (5) angeschlossen ist.

6. Anordnung nach Anspruch 5 umfassend einer Vielzahl von Empfangsantennen (3a, 3b, 3c), **dadurch gekennzeichnet, dass**
- für jede Empfangsantenne (3a, 3b, 3c) jeweils separat eine Echokompensationseinheit (12a, 12b, 12c) vorgesehen ist, die dazu ausgebildet ist, separat das vom Controllerarbeitsplatz (5) abgegebene Sprachsignal (SF) aus dem jeweils empfangenen Sprachsignal (AFa', AFb', AFc') der jeweiligen Empfangsantenne (3a, 3b, 3c) zu entfernen oder zu kompensieren und derart jeweils ein bereinigtes Sprachsignal (AFa', AFb', AFc') zu erstellen, und
dass der Schalter (13) derart gesteuert und ausgebildet ist, bei Vorliegen zumindest eines der Squelch-Signale (SQUa, SQUb, SQUc) der Empfangsantennen (3a, 3b, 3c) das vom Controllerarbeitsplatz (5) abgegebene Sprachsignal (SF) an seinen Ausgang weiterzuleiten.

7. Anordnung nach einem der Ansprüche 5 oder 6, **dadurch gekennzeichnet, dass**
- am Controllerarbeitsplatz (5) ein Push-To-Talk-Button (5c) vorgesehen ist, dessen Sendesignal (PTT) an das Vermittlungssystem (1) und an die Sendeantenne (2) weitergeleitet ist,
- die Sendeantenne (2) dazu ausgebildet ist, das Sprachsignal (SF) des Controllers nur dann auszusenden, wenn das Sendesignal (PTT) indiziert, dass der Push-To-Talk-Button (5c) gedrückt ist,
und
- der Schalter (13) dazu ausgebildet ist, die am Eingang des Schalters (13) anliegenden vom Controllerarbeitsplatz (5) abgegebenen Sprachsignale (SF) an seinen Ausgang weiterzuleiten, wenn einerseits ein Squelch-Signal (SQU) vorliegt und andererseits das Sendesignal (PTT) indiziert, dass der Push-To-Talk-Button (5c) gedrückt ist.

8. Anordnung nach einem der Ansprüche 5 bis 7, **dadurch gekennzeichnet, dass** die Echokompensationseinheit (12) nur dann aktiv ist, wenn ein Squelch-Signal (SQU) der Empfangsantenne (3) indiziert, dass gerade ein Funkspruch von der Empfangsantenne (3) empfangen wird.

## Claims

1. A method for radio communication between a controller and at least one road user,
wherein voice signals (SF) are generated and output by a controller work station (5),
wherein the voice signals (SF) output by the controller work station (5) are transferred to a transmission antenna (2) via a switching system (1) and transmitted by the latter as a radio signal,
wherein voice signals (AF) are received via a receiving antenna (3) and transmitted to the switching system (1),
wherein a squelch signal (SQU) is generated which indicates whether voice messages are contained in the signal present at the receiving antenna (3),
**characterised in that**
- the portion of the voice signal (SF) output by the controller work station (5), in particular with a time delay, is removed or compensated from the received voice signal (AF), and in this way an adjusted voice signal (AF') is determined, and
- the adjusted voice signal (AF') is transmitted to the controller work station (5), wherein, in the event that a squelch signal (SQU) is present, the adjusted voice signal (AF') is output by the controller work station (5), and the non-delayed received signal (SF) in the switching system (1) is superimposed and is transmitted back to the controller work station (5).

2. The method according to claim 1, having a switching system (1) with a plurality of receiving antennae (3a, 3b, 3c), **characterised in that**
- from the individual received voice signals (AFa, AFb, AFc), for each antenna (3a, 3b, 3c), the voice signal (SF) emitted by the controller work station (5) is removed or compensated separately and, in this way, an adjusted voice signal (AFa', AFb', AFc') is generated, and
- **in that** individual or all adjusted voice signals (AFa', AFb', AFc') are superimposed with the signals (SF) output by the controller work station (5) and/or transmitted to the controller work station (5) if at least one of the squelch signals (SQUa, SQUb, SQUc) of the receiving antennae (3a, 3b, 3c) is active.

3. The method according to any one of claims 1 or 2, **characterised in that**
- the transmitting antenna (2) transmits the voice signal (SF) output by the controller work station (5) only when a push-to-talk button (5c) is pressed, and
- the voice signal (SF) emitted by the controller work station (5) is then transmitted back to the controller work station (5) only and superimposed with the adjusted voice signal for this purpose when the push-to-talk button (5c) has been pressed and/or suppressed if the push-to-talk button (5c) has not been pressed.

4. The method according to any one of claims 1 to 3, **characterised in that** the echo compensation unit (12) is only active when a squelch signal (SQU) is present.

5. An assembly for radio communication between a controller and at least one road user, comprising
- at least one controller work station (5) with a microphone (5a) and a speaker (5b),
- a transmitting antenna (2) and a receiving antenna (3),
- a switching system (1) connected to the controller work station (5) as well as to the transmitting antenna (2) and the receiving antenna (3),
- wherein the switching system (1) is configured to forward voice signals (SF) generated and output by the controller work station (5) to the transmitting antenna (2) for radio transmission,
- wherein the switching system (1) is configured to forward voice signals (AF) received by the receiving antenna (3) to the controller work station (5),
- wherein the receiving antenna (3) and/or the switching system (1) is configured to generate a squelch signal (SQU) which indicates whether voice messages are contained in the signal present at the receiving antenna (3),
**characterised in that**
- in the switching system (1), an echo compensation unit (12) is provided, which is configured to remove from the received voice signal (AF) the portion of the controller work station (5) output, in particular delayed received voice signal (SF) or to compensate and so to generate an adjusted voice signal (AF'),
- in the switching system (1), a switch (13) is provided, at the input of which the voice signal (SF) output by the controller work station (5) is supplied and which is configured, in the presence of a squelch signal (SQU), to forward voice signals (SF) output from the controller work station (5) to its output and to suppress the output voice signals (SF) in the absence of a squelch signal (SQU), and
- in the switching system (1), a mixer (14) is provided downstream of the echo compensation unit (12) and the switch (13), which is configured to superimpose signals present on the output of the echo compensation unit (12) and the switch (13) and, at its output, to keep available an overlay signal generated by such overlaying, wherein the output of the mixer (14) is connected to the speaker (5b) of the controller work station (5).

6. The assembly according to claim 5, comprising a plurality of receiving antennae (3a, 3b, 3c), **characterised in that**
- an echo compensation unit (12a, 12b, 12c) is provided separately for each receive antenna (3a, 3b, 3c), which is configured to separately remove or compensate the voice signal (SF) output by the controller work station (5) from the respectively received voice signal (AFa', AFb', AFc') of the respective receiving antenna (3a, 3b, 3c) and in such a manner generate an adjusted voice signal (AFa', AFb', AFc'), and
**in that** the switch (13) is controlled and configured such that, in the presence of at least one of the squelch signals (SQUa, SQUb, SQUc) of the receiving antennae (3a, 3b, 3c), it forwards the voice signal (SF) output from the controller work station (5) to its output.

7. The assembly according to any one of claims 5 to 6, **characterised in that**
- at the controller work station (5), a push-to-talk button (5c) is provided, the transmission signal (PTT) of which is forwarded to the switching system (1) and to the transmission antenna (2),
- the transmitting antenna (2) is configured to transmit the voice signal (SF) of the controller only if the transmission signal (PTT) indicates that the push-to-talk button (5c) is pressed, and
- the switch (13) is configured to forward the voice signals (SF) output to the input of the switch (13) from the controller work station (5) to its output when, on the one hand, there is a squelch signal (SQU) and, on the other hand, the transmission signal (PTT) indicates that the push-to-talk button (5c) is pressed.

8. The assembly according to any one of claims 5 to 7, **characterised in that** the echo compensation unit (12) is only active when a squelch signal (SQU) of the receiving antenna (3) indicates that a radio message is currently being received by the receiving antenna (3).

## Revendications

1. Procédé de communication radio entre un contrôleur et au moins un usager de la route, dans lequel des signaux vocaux (SF) sont générés et émis par un poste de travail de contrôleur (5),
dans lequel les signaux vocaux (SF) émis par le poste de travail de contrôleur (5) sont transmis à une antenne de transmission (2) par l'intermédiaire d'un système de commutation (1) et transmis par cette dernière sous forme de signal radio,
dans lequel les signaux vocaux (AF) sont reçus par l'intermédiaire d'une antenne de réception (3) et transmis au système de commutation (1),
dans lequel un signal de silencieux (SQU) est généré, qui indique si des messages vocaux sont contenus dans le signal présent au niveau de l'antenne de réception (3),
**caractérisé en ce que**
- la proportion du signal vocal (SF) émis par le poste de travail du contrôleur (5), en particulier avec une temporisation, est supprimée ou compensée à partir du signal vocal reçu (AF) et, ainsi un signal vocalclarifié (AF') est déterminé et
- le signal vocal clarifié (AF') est transmis au poste de travail de contrôleur (5), dans le cas où un signal de silencieux (SQU) est présent, le signal vocal clarifié (AF') est superposé au signal (SF) émis par le poste de travail de contrôleur (5) et non temporisé par le système de commutation (1) et est renvoyé au poste de travail du contrôleur (5).

2. Procédé selon la revendication 1, comportant un système de commutation (1) ayant une pluralité d'antennes de réception (3a, 3b, 3c), **caractérisé en ce que**
- à partir des signaux vocaux reçus (AFa, AFb, AFc) pour chaque antenne (3a, 3b, 3c), le signal vocal (SF) émis par le poste de travail du contrôleur (5) est supprimé ou compensé séparément, ce qui permet de générer respectivement un signal vocal clarifié (AFa', AFb', AFc') et
- **en ce que** certains ou tous les signaux vocaux clarifiés (AFa', AFb', AFc') sont superposés aux signaux (SF) émis par le poste de travail de contrôleur (5) et/ou transmis au poste de travail de contrôleur (5) si au moins un des signaux de silencieux (SQUa, SQUb, SQUc) des antennes de réception (3a, 3b, 3c) est actif.

3. Procédé selon la revendication 1 ou 2, **caractérisé en ce que**
- l'antenne de transmission (2) émet le signal vocal (SF) émis par le poste de travail de contrôleur (5) uniquement lorsqu'un bouton de conversation (5c) est enfoncé et
- le signal vocal (SF) émis par le poste de travail de contrôleur (5) est ensuite retransmis au poste de travail de contrôleur (5) et superposé à cet effet avec le signal vocal clarifié uniquement si le bouton de conversation (5c) a été enfoncé et/ou pressé, si le bouton de conversation (5c) n'a pas été enfoncé.

4. Procédé selon l'une des revendications 1 à 3, **caractérisé en ce que** l'unité de compensation d'écho (12) n'est active que lorsqu'un signal de silencieux (SQU) est présent.

5. Agencement de communication radio entre un contrôleur et au moins un usager de la route, comprenant
- au moins un poste de travail de contrôleur (5) équipé d'un microphone (5a) et d'un haut-parleur (5b),
- d'une antenne de transmission (2) et d'une antenne de réception (3),
- d'un système de commutation (1) connecté au poste de travail du contrôleur (5), à l'antenne de transmission (2) et à l'antenne de réception (3),
- dans lequel le système de commutation (1) est conçu pour transmettre des signaux vocaux (SF) générés et émis par le poste de travail de contrôleur (5) à l'antenne de transmission (2) pour une transmission radio,
- dans lequel le système de commutation (1) est conçu pour transmettre des signaux vocaux (AF) reçus par l'antenne de réception (3) au poste de travail de contrôleur (5),
- dans lequel l'antenne de réception (3) et/ou le système de commutation (1) est conçu(e) pour générer un signal de silencieux (SQU) qui indique si des messages vocaux sont contenus dans le signal présent au niveau de l'antenne de réception (3),
**caractérisé en ce**
- **qu'**une unité de compensation d'écho (12) est disposée dans le système de commutation (1), qui est conçue pour supprimer ou pour compenser la proportion du signal vocal (SF) émis par le poste de travail de contrôleur (5), en particulier temporisé, du signal vocal reçu (AF) et ainsi créer un signal vocal clarifié (AF'),
- dans le système de commutation (1), au niveau de l'entrée d'un commutateur (13) est introduit le signal vocal (SF) émis par le poste de travail de contrôleur (5) et ledit commutateur est conçu pour, en présence d'un signal de silencieux (SQU), transférer à sa sortie le signal vocal (SF) émis par le poste de travail de contrôleur (5) et supprimer les signaux vocaux (SF) émis en l'absence d'un signal de silencieux (SQU) et
- dans le système de commutation (1) un mélangeur (14) est monté en aval de l'unité de compensation d'écho (12) et du commutateur (13), qui est conçu pour superposer les signaux présents à la sortie de l'unité de compensation de l'écho (12) et du commutateur (13) et pour maintenir disponible à sa sortie un signal de superposition créé par cette superposition, la sortie du mélangeur (14) étant connectée au haut-parleur (5b) du poste de travail de contrôleur (5).

6. Agencement selon la revendication 5, comprenant une pluralité d'antennes de réception (3a, 3b, 3c), **caractérisé en ce qu'**
- une unité de compensation d'écho (12a, 12b, 12c) est prévue séparément pour chaque antenne de réception (3a, 3b, 3c), conçue pour supprimer ou compenser séparément le signal vocal (SF) émis par le poste de travail du contrôleur (5) du signal vocal reçu (AFa', AFb', AFc') de l'antenne de réception respective (3a, 3b, 3c) et de manière à créer respectivement un signal vocal clarifié (AFa', AFb', AFc') et
**en ce que** le commutateur (13) est commandé et conçu de manière à ce qu'en présence d'au moins l'un des signaux de silencieux (SQUa, SQUb, SQUc) des antennes de réception (3a, 3b, 3c), le signal vocal (SF) émis par le poste de travail du contrôleur (5) soit transmis à sa sortie.

7. Agencement selon une des revendications 5 ou 6, **caractérisé en ce qu'**
- un bouton de conversation (5c) est disposé sur le poste de travail de contrôleur (5) dont le signal de transmission (PTT) est transmis au système de commutation (1) et à l'antenne de transmission (2),
- l'antenne de transmission (2) est conçue pour émettre le signal vocal (SF) du contrôleur uniquement si le signal d'émission (PTT) indique que le bouton de conversation (5c) est enfoncé,
et
- le commutateur (13) est conçu pour transmettre les signaux vocaux (SF) présents à l'entrée du commutateur (13) émis par le poste de travail de contrôleur (5) à sa sortie lorsque, d'une part, il existe un signal de silencieux (SQU) et, d'autre part, le signal de transmission (PTT) indique que le bouton de conversation (5c) est enfoncé.

8. Dispositif selon l'une des revendications 5 à 7, **caractérisé en ce que** l'unité de compensation d'écho (12) n'est active que lorsqu'un signal de silencieux (SQU) de l'antenne de réception (3) indique qu'un message radio est en cours de réception par l'antenne de réception (3).
